# EUROPÄISCHE PATENTANMELDUNG

(11) **EP 4 391 179 A1**
(43) Veröffentlichungstag der Anmeldung: **26.06.2024**
(21) Anmeldenummer: 23215598.6
(22) Anmeldetag: 11.12.2023
(51) Int. Cl.: H01M 50/244, H01M 10/48, H01M 50/204, H01M 50/251, H02M 3/00, H01M 10/42

(54) **MODULARES BATTERIESYSTEM**

(30) Priorität: 21.12.2022 DE 102022134349
(71) Anmelder: Viessmann Climate Solutions SE, 35108 Allendorf (DE)
(72) Erfinder: HOY, Sébastien, 57350 Spicheren (FR); SIMONOW, Alexander, 35066 Frankenberg (DE); RIEDL, Wolfgang, 57330 Entrange (FR); KOCH, Mario, 35110 Frankenau (DE); KLEE, Hanspeter, 35083 Wetter (DE); BOCK, Johannes, 97464 Oberwern (DE); HOPF, Markus, 34314 Espenau (DE); STEINBACH, Konstantin, 34225 Baunatal (DE); KLINGER, Felix, 57155 Marly (FR)
(74) Vertreter: MERH-IP Matias Erny Reichl Hoffmann Patentanwälte PartG mbB

(57) **Zusammenfassung**

Ein modulares Batteriesystem (1) für ein Gebäude, umfasst eine Vielzahl von Batteriemodulen (11) zum Speichern elektrischer Energie, eine Vielzahl von Trageeinrichtungen (13) jeweils zum Montieren des Wechselrichtermoduls (10) und der Batteriemodule (11) an einer Wand und eine Verkabelung (12) zum Verbinden der Batteriemodule (11) mit dem Wechselrichtermodul (10). Die Trageeinrichtungen (13) weisen jeweils Schächte (131) zum Verlegen der Verkabelung (12) auf.

## Beschreibung

Die vorliegende Erfindung betrifft ein modulares Batteriesystem für ein Gebäude. Durch eine flexible Anordnung kann das Batteriesystem an einen Aufstellort angepasst werden.

Batteriesysteme werden zum Speichern elektrischer Energie in Gebäuden, beispielsweise in Wohnhäusern, Bürogebäuden oder sonstigen gewerblich und/oder zum Wohnen genutzten Gebäuden verwendet. Solche Batteriesysteme werden zusammenfassend auch als Stromspeicher bezeichnet. Ein derartiger Stromspeicher kann insbesondere zum Speichern elektrischer Energie verwendet werden, die lokal durch eine Photovoltaik-Anlage (PV-Anlage) erzeugt wird.

Aufgrund des unterschiedlichen Bedarfs verschieden großer und verschieden genutzter Gebäude, ist es vorteilhaft, wenn die Größe des Stromspeichers flexibel an die Anforderung des jeweiligen Gebäudes angepasst werden kann. Daher werden Batteriesysteme zum Teil modular aufgebaut.

Aus der Gebrauchsmusterschrift DE 20 2012 104 578 U1 ist beispielsweise ein modulares Batteriegestell mit einer Mehrzahl von nach einem Baukastenprinzip miteinander kombinier- und stapelbaren Grundelementen zum Unterbringen einer Mehrzahl von Batterien bekannt. Dabei wird jedes Grundelement mit einer Abdeckung versehen. Das Batteriegestell ist ähnlich wie ein Regal aufgebaut, wobei die einzelnen Grundelemente übereinander gestapelt werden.

Der Aufstellort von Stromspeichern kann je nach Gebäude sehr unterschiedlich sein. Beispielsweise kann das Platzangebot aufgrund anderer aufgestellter Geräte, wie z.B. einem Heizkessel oder dergleichen beschränkt sein. Eine daraus resultierende Aufgabe der vorliegenden Erfindung liegt somit darin, ein möglichst variables modulares Batteriesystem bereitzustellen. Ferner soll das Installieren der einzelnen Module möglichst einfach sein, um dadurch Zeit und Kosten zu sparen.

Der vorliegenden Erfindung liegt somit die Aufgabe zugrunde, die im Stand der Technik bekannten Probleme zu überwinden und ein gegenüber dem Stand der Technik verbessertes modulares Batteriesystem bereitzustellen.

Die Lösung der Aufgabe gelingt erfindungsgemäß durch ein modulares Batteriesystem für ein Gebäude nach Anspruch 1. Bevorzugte Ausgestaltungen der vorliegenden Erfindung sind Gegenstand der abhängigen Ansprüche, der angehängten Zeichnungen und der folgenden Beschreibung von Ausführungsbeispielen.

Das erfindungsgemäße modulare Batteriesystem kann gemäß einer bevorzugten Ausführung ein Wechselrichtermodul mit einem Wechselrichter zum Konvertieren eines Gleichstroms in einen Wechselstrom umfassen. Der Wechselrichter ist somit bereits in das Batteriesystem integriert, so dass kein externer Wechselrichter mehr benötigt wird. Ein solches Batteriesystem mit integriertem Wechselrichter wird auch als Hybridspeicher bezeichnet.

Das Batteriesystem umfasst ferner eine Vielzahl von Batteriemodulen zum Speichern elektrischer Energie. Jedes Batteriemodul kann aus einer Batterieeinheit bestehen oder mehrere Batterieeinheiten aufweisen, die jeweils eine Vielzahl von Zellen umfassen. Die Anzahl der Batteriemodule hängt von der gewünschten bzw. erforderlichen Speicherkapazität des Batteriesystems ab. Beispielsweise kann ein Batteriesystem zwei, drei, vier, fünf oder mehr Batteriemodule aufweisen.

Gemäß einer bevorzugten Ausführung kann die Anzahl der Batteriemodule an den Bedarf angepasst werden. Erhöht sich beispielsweise der Speicherbedarf in einem Gebäude, können weitere zusätzliche Batteriemodule installiert und in das System integriert werden. Ferner können einzelne Module zur Wartung auf einfache Weise ausgetauscht werden.

Das Wechselrichtermodul kann neben dem Wechselrichter auch eine Einrichtung zum Steuern, Regeln und/oder Überwachen der Batteriemodule aufweisen. Beispielsweise überwacht eine Steuereinrichtung im Wechselrichtermodul einen Ladezustand und/oder eine Temperatur der einzelnen Batteriemodule.

Das Batteriesystem umfasst eine Vielzahl von Trageeinrichtungen, die jeweils an einer Wand befestigt werden können. Jede Trageeinrichtung kann ein Wechselrichtermodul oder ein Batteriemodul tragen. Die Trageeinrichtungen dienen somit zum Montieren des Wechselrichtermoduls und der Batteriemodule an der Wand. Die Trageeinrichtungen sind vorzugsweise als stabile Rahmenkonstruktion ausgebildet und können z.B. aus einem Metall oder einer Metalllegierung gefertigt sein. Zum Aufbauen der Trageeinrichtungen können beispielsweise Profilbleche verwendet werden, so dass bei geringem Gewicht der Trageeinrichtung auch Module mit hohem Gewicht getragen werden können.

Gemäß einer bevorzugten Ausführung sind die Trageeinrichtungen für das Wechselrichtermodul und die Batteriemodule identisch aufgebaut. In alternativen Ausführungen unterscheidet sich die Trageeinrichtung für das Wechselrichtermodul von den Trageeinrichtungen für die Batteriemodule.

Vorzugsweise kann jede Trageeinrichtung für ein Batteriemodule zwei oder mehr Batterieeinheiten tragen, die beispielsweise nebeneinander oder voreinander an der Trageeinrichtung befestigt werden können.

Das Batteriesystem umfasst eine Verkabelung zum Verbinden der Batteriemodule mit dem Wechselrichtermodul. Die Verkabelung kann vorzugsweise als Kabelbaum ausgebildet sein, bei dem jeweilige Stecker zum Anschließen der einzelnen Module vorkonfektioniert sein können.

Gemäß einer bevorzugten Ausführung kann die Verkabelung Stromleitungen, Kommunikationsleitungen und Sensorleitungen umfassen. Die Leitungen können insbesondere einen CAN-Bus umfassen. Beispielsweise kann die Verkabelung derart ausgebildet sein, dass die Batteriemodule seriell miteinander verschaltet werden.

Die Trageeinrichtungen umfassen jeweils Schächte zum Verlegen der Verkabelung. Hierdurch kann das Installieren des Batteriesystems deutlich erleichtert werden. Beispielsweise werden beim Installieren zunächst die Trageeinrichtungen an einer Wand am Aufstellort befestigt. Anschließend kann die Verkabelung für die Module in den Schächten der Trageeinrichtungen verlegt werden. Dann werden die Module an den Trageeinrichtungen eingehängt und befestigt. Das Anschließen der Module kann dann vorzugsweise durch Verbinden von Steckern der Verkabelung mit entsprechenden Anschlüssen an den Modulen erfolgen.

Die Batteriemodule können ausgehend vom Wechselrichtermodul jeweils in einem Raster nebeneinander und/oder untereinander an der Wand angeordnet werden. Die Anordnung der Batteriemodule kann vorzugsweise so ausgeführt sein, dass das Wechselrichtermodul nur ein direkt benachbartes Batteriemodul aufweist. Weiter vorzugsweise weist jedes Batteriemodul höchstens zwei direkt benachbarte Module auf. Ein letztes Batteriemodul der Anordnung weist nur ein direkt benachbartes Batteriemodul auf.

Die Trageeinrichtungen sind vorzugsweise jeweils so aufgebaut, um das Wechselrichtermodul bzw. die Batteriemodule mit einem lichten Maß an der Wand zu montieren. In anderen Worten, die Module können mit einem Abstand zur Wand an den Trageeinrichtungen befestigt werden. Dies hat den Vorteil, dass der Wechselrichter im Wechselrichtermodul und/oder die Zellen in den Batteriemodulen besser gekühlt werden können. Ferner wird durch den Abstand ein Platz zum Verlegen der Verkabelung geschaffen.

Besonders vorzugsweise bildet die Trageeinrichtung selbst den Abstand zur Wand, wobei eine Rückwand der Trageeinrichtung zur Wand beabstandet angeordnet ist.

Ein von der Trageeinrichtung getragenes Batteriemodul kann dann ohne Abstand direkt an der Rückwand angeordnet werden.

Das Wechselrichtermodul und die Batteriemodule können jeweils ein abnehmbares Gehäuse aufweisen. Das abnehmbare Gehäuse umfasst vorzugsweise eine Frontplatte, zwei mit der Frontplatte verbundene Seitenwände, eine mit der Frontplatte verbundene Bodenplatte und eine mit der Frontplatte verbundene Deckplatte, wobei die Rückseite des Gehäuses offen ist. Die Rückseite ist hierbei die der Wand zugewandte Seite. Bei untereinander angeordneten Batteriemodulen, kann das abnehmbare Gehäuse zwischen den Batteriemodulen vorzugsweise ohne Deckplatte ausgeführt sein.

Die Seitenwände sowie die Frontplatte des Gehäuses sind vorzugsweise senkrecht angeordnet, wobei die Seitenwände auch senkrecht zur Wand und die Frontplatte parallel zur Wand angeordnet sind. Die Bodenplatte und die Deckplatte sind vorzugsweise jeweils horizontal angeordnet. Das Raster der Anordnung des modularen Batteriesystems an der Wand gleicht somit vorzugsweise einem orthogonalen Gitter auf der Wand, wobei die Gitterlinien vertikal bzw. horizontal ausgerichtet sind.

Vorzugsweise weisen die Batteriemodule und das Wechselrichtermodul jeweils eine rechteckige, insbesondere quadratische, Grundfläche vor der Wand auf. Entsprechend haben die Module mit ihrem Gehäuse vorzugsweise die Form eines Quaders oder eines Würfels.

Die Anordnung der Module an der Wand nebeneinander erfolgt vorzugsweise derart, dass jeweils eine rechte Seitenwand eines Moduls einer linken Seitenwand eines benachbarten Moduls zugewandt ist, wobei der Abstand zwischen den benachbarten Seitenwänden vorzugsweise kleiner als ein Zentimeter ist. Besonders vorzugsweise ist kein Abstand vorhanden, so dass sich die Seitenwände der Module berühren.

Die Anordnung der Module an der Wand übereinander erfolgt vorzugsweise derart, dass jeweils eine Bodenplatte eines Moduls einer Deckplatte eines benachbarten Moduls zugewandt ist, wobei der Abstand zwischen den benachbarten Boden- und Deckplatten vorzugsweise kleiner als ein Zentimeter ist. Weiter vorzugsweise ist kein Abstand vorhanden, so dass sich die Boden- und Deckplatten berühren. Gemäß einer besonders bevorzugten Ausführung kann zwischen übereinander angeordneten Modulen auf eine Boden- bzw. Deckplatte verzichtet werden.

Das Batteriesystem umfasst vorzugsweise einen Umgebungstemperatursensor zum Messen einer Umgebungstemperatur. Der Umgebungstemperatursensor besonderes vorzugsweise in einem vom Wechselrichtermodul am weitesten entfernten Batteriemodul angeordnet. Dies hat den Vorteil, dass das Wechselrichtermodul, welches üblicherweise am meisten Wärme an die Umgebung abgibt, die Messung der Umgebungstemperatur möglichst wenig beeinflussen kann.

### KURZBESCHREIBUNG DER FIGUREN

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
- **Figur 1**: illustriert eine Anordnung eines erfindungsgemäßen Batteriesystems.
- **Figur 2**: illustriert einen Schaltplan eines erfindungsgemäßen Batteriesystems.
- **Figur 3**: illustriert ein Ausführungsbeispiel eines erfindungsgemäßen Batteriesystems.
- **Figur 4**: illustriert eine Trageeinrichtung des erfindungsgemäßen Batteriesystems.
- **Figur 5**: ist eine Seitenansicht eines Batteriemoduls mit Trageeinrichtung.

### AUSFÜHRLICHE BESCHREIBUNG DER ERFINDUNG ANHAND VON AUSFÜHRUNGSBEISPIELEN

Bei der nachfolgenden Beschreibung einer bevorzugten Ausführungsform der vorliegenden Erfindung bezeichnen gleiche Bezugszeichen gleiche oder vergleichbare Komponenten.

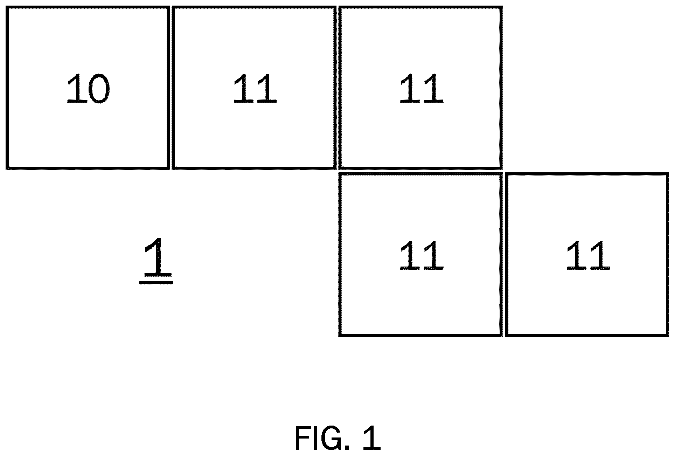

Fig. 1 zeigt eine beispielhafte Anordnung eines erfindungsgemäßen modularen Batteriesystems 1 mit einem Wechselrichtermodul 10 und vier Batteriemodulen 11 an einer Wand. Die Ansicht zeigt schematisch eine Ansicht von vorne auf die Frontseiten der Module 10, 11 vor der Wand.

Die Anordnung der Module 10, 11 des Batteriesystems 1 folgt einem rechteckigen Raster, wobei die Batteriemodule 11 ausgehend vom Wechselrichtermodul 10 jeweils seitlich nebeneinander bzw. untereinander angeordnet sind. Entsprechend kann die Verkabelung der Module horizontal und vertikal erfolgen.

Ausgehend vom Wechselrichtermodul 10 ist ein erstes Batteriemodul 11 rechts neben dem Wechselrichtermodul 10 an der Wand angeordnet. Rechts neben dem ersten Batteriemodul 11 ist ein zweites Batteriemodul 11 angeordnet. Ein drittes Batteriemodul 11 ist unter dem zweiten Batteriemodul 11 angeordnet und ein viertes Batteriemodul 11 ist rechts neben dem dritten Batteriemodul 11 angeordnet.

Abweichend von der dargestellten beispielhaften Anordnung können die Batteriemodule 11 beliebig seitlich nebeneinander und/oder übereinander und/oder untereinander angeordnet werden. Die resultierende Anordnung kann bei Modulen mit quadratischer Grundfläche vor der Wand auch als Polyomino bezeichnet werden. Das dargestellte Beispiel mit fünf Modulen ist somit ein Pentomino.

Weitere bevorzugte Ausführungsformen eines Batteriesystems 1 mit einem Wechselrichtermodul 10 und einer ganzen Anzahl N Batteriemodulen 11, also mit insgesamt N+1 Modulen, können entsprechend als Domino (N=1), Tromino (N=2), Tetromino (N=3), Pentomino (N=4), Hexomino (N=5), Heptomino (N=6), Oktomino (N=7), Nonomino (N=8), Dekomino (N=9), Undekomino (N=10), Dodekomino (N=11) usw. ausgeführt sein.

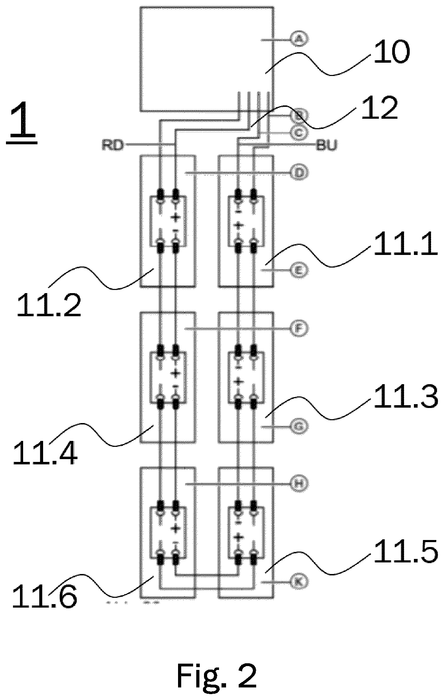

Fig. 2 illustriert einen Schaltplan eines Batteriesystems 1 mit einem Wechselrichtermodul 12 und drei Batteriemodulen 11. Die Batteriemodule 11 umfassen jeweils zwei Batterieeinheiten 11.1 bis 11.6, die ausgehend vom Wechselrichtermodul 12 über eine Verkabelung 12, die Stromleitungen und Kommunikationsleitungen umfasst, seriell in einer Ringarchitektur miteinander verschaltet sind. Das Wechselrichtermodul 10 ist mit einem A beschriftet. Die sechs Batteriemodule 11.1 bis 11.6 sind mit den Buchstaben D, E, F, G, H, K beschriftet.

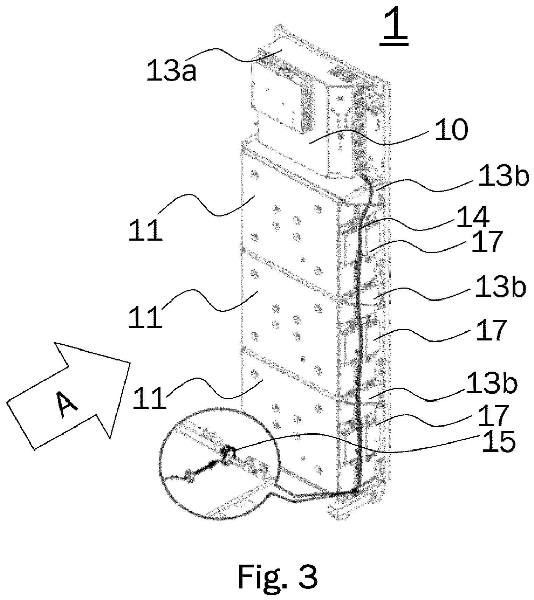

Fig. 3 zeigt eine dem Schaltplan der Fig. 2 entsprechende perspektivische Ansicht des Batteriesystems 1 mit einem Wechselrichtermodul 12 und drei Batteriemodulen 11. Die Module sind hier beispielhaft in einem Regal montiert. Das Wechselrichtermodul 12 hängt in einer ersten Trageeinrichtung 13a. Die drei Batteriemodule 11 hängen jeweils in einer zweiten Trageeinrichtung 13b.

Da jedes Batteriemodul 11 zwei Batterieeinheiten aufweist, hängen in jeder zweiten Trageeinrichtung 13b jeweils zwei Batterieeinheiten. Die Batterieeinheiten hängen in der durch den Pfeil A angedeuteten Blickrichtung voreinander. Die jeweiligen Gehäuse der Module 10, 11 wurden bei der Darstellung entfernt, so dass die seitlichen Anschlüsse 17 der einzelnen Batterieeinheiten sichtbar sind.

In der in Fig. 3 gezeigten Anordnung der Module 10, 11 übereinander kann die Verkabelung zwischen den Modulen einfach senkrecht zwischen den Anschlüssen 17 der Batterieeinheiten gemäß dem in Fig. 2 gezeigten Schaltplan ausgeführt werden. Die nicht dargestellten Gehäusedeckel können an den Kanten entsprechende Aussparungen für die Verkabelung aufweisen.

Das in Fig. 3 gezeigte Batteriesystem 1 umfasst zusätzlich einen Umgebungstemperatursensor 15, der über eine entsprechende Sensorleitung 14 mit dem Wechselrichtermodul 10 verbunden ist. Der Umgebungstemperatursensor 15 wird im untersten Batteriemodul 11 angeordnet, das am weitesten vom Wechselrichtermodul 10 entfernt ist, damit die Messung der Umgebungstemperatur durch die Abwärme des Wechselrichters nicht bzw. möglichst wenig beeinflusst wird.

Anstelle des in Fig. 3 gezeigten Regals können die Trageeinrichtungen 13 auch direkt an einer Wand befestigt werden. Die Trageeinrichtungen 13 erlauben dabei eine flexible Anordnung in einem wie oben beschriebenen Raster.

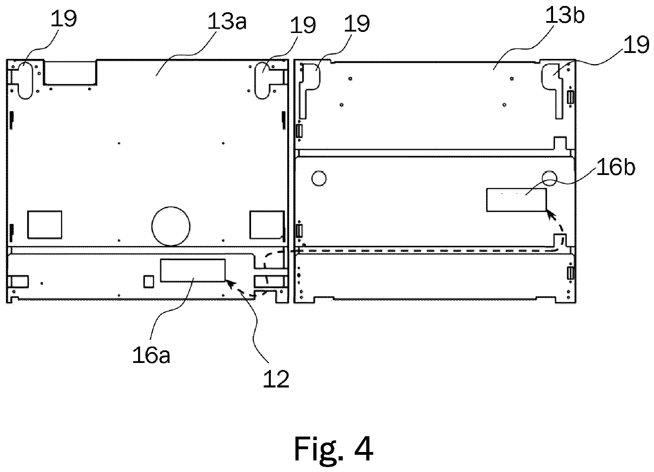

Fig. 4 zeigt auf der rechten Seite eine Trageeinrichtung 13a für ein Wechselrichtermodul 10 und auf der linken Seite eine Trageeinrichtung 13b für ein Batteriemodul 11. Da diese Trageeinrichtungen 13 zum Befestigen an einer Wand vorgesehen sind, können sie auch als Wandhalterungen bezeichnet werden. Fig. 4 zeigt eine Draufsicht von vorne auf eine Rückwand der Trageeinrichtungen 13. Dies entspricht der Ansicht von vorne wenn die Trageeinrichtungen 13 an einer Wand befestigt sind.

Der gestrichelte Pfeil 12 in Fig. 4 illustriert den Verlauf einer Verkabelung zum Verbinden von Batteriemodulen 11 mit dem Wechselrichtermodul 10. Zum Verlegen der Verkabelung weisen die Trageeinrichtungen 13 horizontal verlaufende Kabelschächte auf, die hinter der Rückwand verlaufen. Mit anderen Worten, die Verkabelung kann zwischen der Rückwand der Trageeinrichtung 13 und der Wand, an der die Trageeinrichtung 13 befestigt ist, verlegt werden.

In der Rückwand der Trageeinrichtungen 13 sind jeweils Öffnungen 16 zum Durchführen der Verkabelung 12 ausgebildet. Der Ort der Öffnung 16a in der Trageeinrichtung 13a unterscheidet sich vom Ort der Öffnung 16b in der Trageeinrichtung 13b, da diese jeweils an die Anschlüsse des Wechselrichtermoduls 10 bzw. des Batteriemoduls 11 angepasst sind.

Die Rückwand der Trageeinrichtung 13a bzw. 13b weist an den Ecken jeweils Öffnungen 19 zum Befestigen der Trageeinrichtung 13a bzw. 13b an einer Wand auf. Beispielweise kann die Trageeinrichtung 13a bzw. 13b an passenden an der Wand verschraubten Halterungen eingehängt werden.

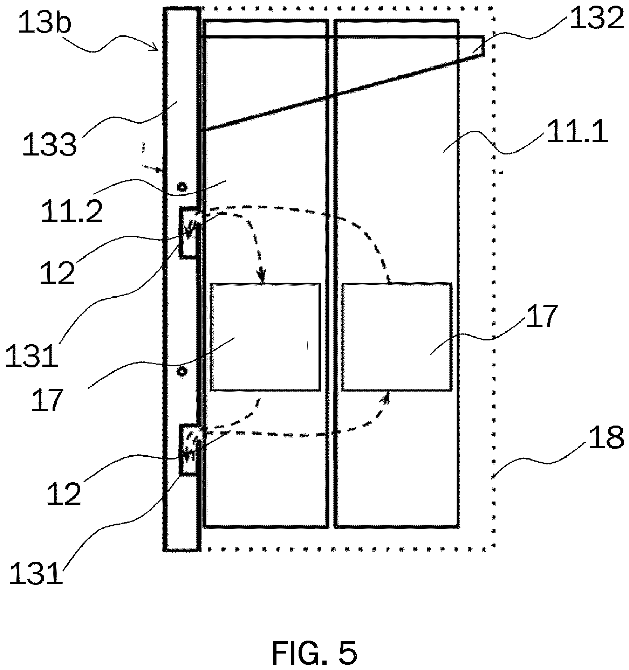

Fig. 5 zeigt eine Seitenansicht der Trageeinrichtung 13b für ein Batteriemodul 11, da zwei Batterieeinheiten 11.1 und 11.2 umfasst. Die gepunktete Linie in Fig. 5 deutet das Gehäuse 18 des Batteriemoduls 11 an. Das Gehäuse 18 ist ein Quader mit fünf Seiten der hinten offen ist, so dass das Gehäuse von vorne über das Batteriemodul 11 geschoben werden kann. Die Befestigung kann beispielsweise über Verklipsen mit der Trageeinrichtung 13 erfolgen. Das Wechselrichtermodul 10 weist ein ähnliches Gehäuse auf.

Die in Fig. 5 gezeigte Trageeinrichtung 13b des Batteriemoduls 11 umfasst zwei von der Rückwand 133 nach vorne abstehenden Tragearme 132, an denen die beiden Batterieeinheiten 11.1 und 11.2 aufgehängt werden. In der Seitenansicht der Fig. 5 ist nur einer der Tragearme 132 erkennbar.

Die gestrichelten Pfeile in Fig. 5 illustrieren den Verlauf der Verkabelung 12, welche von den seitlichen Anschlüssen 17 der Batterieeinheiten zu den beiden horizontal in der Rückwand 133 verlaufenden Kabelschächten 131 geführt wird.

Die Rückwand 133 ist hier an beiden Seiten als abgekantetes Blech ausführt, das von oben gesehen die Form eines U hat. Die Rückwand 133 umfasst somit eine Rückenfläche und zweit Seitenflächen. Die Kanten der Seitenflächen liegen auf der Wand, an der die Trageeinrichtung 13 montiert wird, auf, so dass zwischen Wand und Rückenfläche ein lichter Abstand entsteht, der zum Kühlen des Wechselrichtermoduls 10 bzw. des Batteriemoduls 11 genutzt werden kann.

Die horizontal in der Rückwand 133 verlaufenden Kabelschächte 131 ermöglichen die einfache variable Anordnung der Module an der Wand. Beim Installieren des erfindungsgemäßen Batteriesystems 1 werden vorzugsweise zunächst die Trageeinrichtungen 13 an der Wand befestigt. Dann kann die Verkabelung 12, die vorzugsweise als vorkonfektionierter Kabelbaum ausgeführt ist, in den Kabelschächten 131 verlegt. Anschließend können das Wechselrichtermodul 10 und die Batteriemodule 11 in den Trageeinrichtungen 13 montiert werden. Danach werden die Anschlüsse der Verkabelung mit den Anschlüssen der Module verbunden. Zuletzt können die einzelnen Module 10, 11 mit ihren jeweiligen Gehäusen 18 abgedeckt werden, so dass eine nach außen geschlossene Anordnung entsteht.

Die Führung der Verkabelung 12 durch die Kabelschächte 131 vereinfacht insbesondere das Verkabeln zweier horizontal nebeneinander angeordneter Module 10, 11. Vertikal übereinander angeordnete Module 10, 11 können auch direkt miteinander verkabelt werden, ohne dass hierfür die dabei notwendigen Kabel durch die Kabelschächte 131 verlegt werden. Hierzu können die Gehäuse 18 der Module 10, 11 an ihren Kanten entsprechende Aussparungen aufweisen, damit das Gehäuse 18 trotz der zwischen den Modulen 10, 11 verlegten vertikalen Kabel einfach über das jeweilige Modul 10, 11 geschoben werden kann.

Das hier beschriebene modulare Batteriesystem 1 erlaubt eine flexible Anordnung der Module 10, 11 an einer Wand. Somit kann das Batteriesystem 1 an den verfügbaren Platz am Aufstellort angepasst werden. Ferner kann ein Hinzufügen bzw. Entfernen von Modulen 10, 11 auf einfache Weise erfolgen, was ein Warten bzw. Erweitern oder Verkleinern des Stromspeichers vereinfacht.

Dadurch, dass die Module 10, 11 eine einheitliche Größe aufweisen und mit einem Gehäuse 18 verschlossen werden, kann ein attraktives und aufgeräumtes äußeres Erscheinungsbild erreicht werden, so dass das Batteriesystem 1 auch in Wohn- oder Arbeitsräumen installiert werden kann. Außerdem werden die inneren Komponenten durch das Gehäuse vor äußeren Einflüssen geschützt, während durch die von der Wand beabstandete Anordnung eine ausreichende Kühlung gewährleistet werden kann.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Modulares Batteriesystem (1) für ein Gebäude, umfassend:
eine Vielzahl von Batteriemodulen (11) zum Speichern elektrischer Energie;
eine Vielzahl von Trageeinrichtungen jeweils zum Montieren des Wechselrichtermoduls (10) und der Batteriemodule (11) an einer Wand; und
eine Verkabelung zum Verbinden der Batteriemodule (11) mit dem Wechselrichtermodul (10), wobei:
die Trageeinrichtungen jeweils Schächte (131) zum Verlegen der Verkabelung aufweisen.

2. Modulares Batteriesystem (1) nach Anspruch 1, ferner umfassend:
ein Wechselrichtermodul (10) mit einem Wechselrichter zum Konvertieren eines Gleichstroms in einen Wechselstrom.

3. Modulares Batteriesystem (1) nach Anspruch 2, wobei
die Batteriemodule (11) ausgehend vom Wechselrichtermodul (10) jeweils in einem Raster nebeneinander und/oder untereinander an der Wand angeordnet sind.

4. Modulares Batteriesystem (1) nach einem der vorstehenden Ansprüche, wobei
die Trageeinrichtungen (13) jeweils konfiguriert sind, das Wechselrichtermodul (10) bzw. die Batteriemodule (11) mit einem Abstand zur Wand zu montieren.

5. Modulares Batteriesystem (1) nach einem der vorstehenden Ansprüche, wobei
das Wechselrichtermodul (10) und die Batteriemodule (11) jeweils ein abnehmbares Gehäuse (18) aufweisen.

6. Modulares Batteriesystem (1) nach Anspruch 5, wobei
das abnehmbare Gehäuse (18) eine Frontplatte, zwei mit der Frontplatte verbundene Seitenwände, eine mit der Frontplatte verbundene Bodenplatte und eine mit der Frontplatte verbundene Deckplatte aufweist, wobei die Rückseite des Gehäuses offen ist.

7. Modulares Batteriesystem (1) nach einem der vorstehenden Ansprüche, wobei
die Verkabelung (12) Stromleitungen, Kommunikationsleitungen und Sensorleitungen umfasst.

8. Modulares Batteriesystem (1) nach einem der vorstehenden Ansprüche, wobei
die Batteriemodule (11) seriell verschaltet sind.

9. Modulares Batteriesystem (1) nach einem der vorstehenden Ansprüche, ferner umfassend:
einen Umgebungstemperatursensor (15) zum Messen einer Umgebungstemperatur.

10. Modulares Batteriesystem (1) nach Anspruch 9, wobei
der Umgebungstemperatursensor (15) in einem vom Wechselrichtermodul (10) am weitesten entfernten Batteriemodul (11) angeordnet ist.

11. Modulares Batteriesystem (1) nach einem der vorstehenden Ansprüche, wobei
jedes Batteriemodul (11) mindestens zwei Batterieeinheiten (11.1, 11.2) aufweist.
